(19) Europäisches Patentamt
European Patent Office
Office européen des brevets

(11) EP 4 176 116 B1

(12) EUROPEAN PATENT SPECIFICATION

(45) Date of publication and mention of the grant of the patent:
**25.09.2024 Bulletin 2024/39**

(21) Application number: **21755578.8**

(22) Date of filing: **04.08.2021**

(51) International Patent Classification (IPC):
***D04H 1/4291*** *(2012.01)* ***B01D 39/16*** *(2006.01)*
***B03C 3/28*** *(2006.01)* ***B03C 3/30*** *(2006.01)*
***D04H 1/4326*** *(2012.01)* ***D04H 1/435*** *(2012.01)*
***D04H 1/56*** *(2006.01)* ***D04H 3/007*** *(2012.01)*
***D04H 3/009*** *(2012.01)* ***D04H 3/011*** *(2012.01)*
***D06M 10/02*** *(2006.01)*

(52) Cooperative Patent Classification (CPC):
**D04H 1/4291; B01D 39/163; B01D 39/1692; D01F 1/10; D04H 1/4326; D04H 1/435; D04H 1/56; D04H 3/007; D04H 3/009; D04H 3/011;**
B01D 2239/0435; B01D 2239/0622; B01D 2239/0627; B01D 2239/1233; B01D 2239/1266; (Cont.)

(86) International application number:
**PCT/IB2021/057172**

(87) International publication number:
**WO 2022/034444 (17.02.2022 Gazette 2022/07)**

# (54) ELECTRET WEBS WITH BENZOATE SALT CHARGE-ENHANCING ADDITIVES

ELEKTRETNETZE MIT BENZOATSALZLADUNGSERHÖHENDEN ADDITIVEN

BANDES D’ÉLECTRET À ADDITIFS D’ACCROISSEMENT DE CHARGE DE TYPE SEL DE BENZOATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2020 US 202063064122 P**

(43) Date of publication of application:
**10.05.2023 Bulletin 2023/19**

(73) Proprietor: **3M Innovative Properties Company**
**Saint Paul, Minnesota 55133-3427 (US)**

(72) Inventors:
- **LI, Fuming B.**
  **Saint Paul, Minnesota 55133-3427 (US)**
- **BRANDNER, John M.**
  **Saint Paul, Minnesota 55133-3427 (US)**
- **WEBB, Richard C.**
  **Saint Paul, Minnesota 55133-3427 (US)**
- **LENG, Siwei**
  **Saint Paul, Minnesota 55133-3427 (US)**
- **SCHULTZ, Nathan E.**
  **Saint Paul, Minnesota 55133-3427 (US)**

(74) Representative: **Mathys & Squire**
**Theatinerstraße 7**
**80333 München (DE)**

(56) References cited:
**EP-A1- 1 510 241** **US-A- 6 110 251**
**US-A1- 2015 137 415** **US-A1- 2016 067 717**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 176 116 B1

(52) Cooperative Patent Classification (CPC): (Cont.)
B01D 2239/1291; B03C 3/28; D01D 5/0985;
D01F 6/06

## Description

### Field of the Disclosure

This disclosure relates to electret webs, including non-woven fibrous webs such as non-woven thermoplastic microfiber webs, containing charge-enhancing additives and uses thereof.

### Background

An electret is a dielectric material that exhibits a quasi-permanent electrical charge. Electrets are useful in a variety of devices including, e.g. cling films, air filters, filtering facepieces, and respirators, and as electrostatic elements in electro-acoustic devices such as microphones, headphones, and electrostatic recorders.

The performance of microfibrous webs used for aerosol filtration can be improved by imparting an electrical charge to the fibers, forming an electret material. In particular, electrets are effective in enhancing particle capture in aerosol filters. A number of methods are known for forming electret materials in microfibrous webs. Such methods include, for example, bombarding melt-blown fibers as they issue from the die orifices, as the fibers are formed, with electrically charged particles such as electrons or ions. Other methods include, for example, charging the fibers after the web is formed, by means of a corona discharge or imparting a charge to the fiber mat by means of carding and/or needle tacking (tribocharging). In addition, a method in which jets of water or a stream of water droplets impinge on a non-woven web at a pressure sufficient to provide filtration enhancing electret charge has also been described (hydrocharging).

US 2015/137415 A1 discloses a filtration material comprising a blend of polypropylene and acrylic fibers of round, flat, dog bone, oval or kidney bean shape in any size from 0.08 to 3.3 Dtex. A preferred blend contains about 50 weight percent polypropylene fibers and about 50 weight percent acrylic fibers. The fibers can be blended ranging from 90:10 to 10:90 polypropylene to acrylic. The shape contains 25 weight percent round, flat, oval, dog bone and kidney bean shapes. The fiber blend contains 25 weight percent of at least one size between 0.08 and 3.3 Dtex. Electret fibers incorporated within these blends have 0.02 to 33 weight percent of a charge control agent. These fibers can be used in producing electret material by corona or triboelectric charging methods.

US2016067717 A1 discloses electret webs including a thermoplastic resin and a charge-enhancing additive. The charge-enhancing additive is an arylamino-substituted benzoic acid or an arylamino-substituted benzoic acid salt. The electret webs may be a non-woven fibrous web or a film. The electret webs are suitable for use as filter media.

US6110251 A discloses an improved gas filtration media with a lower initial pressure drop and increased dirt holding capacity includes a fibrous mat of randomly oriented meltblown polymeric fibers made from a polymer with between 0.2% and 10.0% by weight of: a) a nucleating agent to increase the rate of crystallization of the polymer forming the fibers and improve the heat sealability of media made from the fibers and/or b) an electrostatic charging enhancer to reduce surface tension of the polymer and inter-fiber attraction, as the fibers are cooled during formation and collection the fibers, to thereby facilitate the formation of the fibrous mat with discrete fibers. Preferably, the polymer is polypropylene, the nucleating agent is bis-benzylidene sorbitol, and electrostatic charging enhancer is a fatty acid.

EP1510241 A1 discloses an electret filter which has a large surface charge density, sustains stable electret properties over a long time even in a high-temperature atmosphere and yet degrades to reduce its volume when buried for disposal; and a process for producing the same. The molar ratio of an L-lactic acid monomer to a D-lactic acid monomer ranges from 100 to 85 : 0 to 15 or 0 to 15 : 85 to 100. An electret filter having a surface charge density of 1.2x10<-9> C/cm<2> or more can be obtained by crystallizing by heating at a temperature from the glass transition temperature to the melting point and then, while heating to 60 to 140 DEG C, applying a direct current corona electrical field to thereby cool to 40 DEG C or lower under.

### Summary

This disclosure relates to electret webs, that are non-woven fibrous webs containing charge-enhancing additives and uses thereof, such as electric filter media.

In some embodiments, the electret webs comprise a thermoplastic resin and a charge-enhancing additive comprising substituted- or unsubstituted-aromatic carboxylate salts, typically, substituted or unsubstituted benzoate salts. These salts can be described by the general structure of Formula 1 shown below:

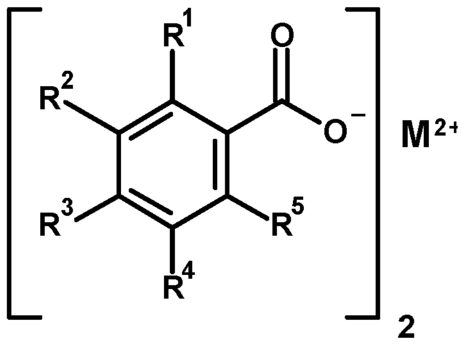

Formula 1

where the groups $R^1$, $R^2$, $R^3$, $R^4$, and $R^5$ independently comprise a hydrogen atom, an alkyl, an aryl, a substituted alkyl, or a hydroxyl (-OH) group; and M is a metal ion with a valency of 2.

**Detailed Description**

The need remains for electret webs with improved properties. Presented in this disclosure are electret webs containing charge-enhancing additives. These charge-enhancing additives provide electret webs that are easy to charge by a variety of different charging mechanisms such as tribocharging, corona discharge, hydrocharging or a combination thereof. In some embodiments, the electret webs of this disclosure are capable of being charged by corona discharge alone, particularly DC corona discharge, without the need for additional charging mechanisms.

Electret webs useful in the present disclosure include a blend of a thermoplastic resin and a charge-enhancing additive. Webs prepared from such blends can show enhanced properties over webs prepared with the thermoplastic resins alone. Useful charge-enhancing additives comprise substituted- or unsubstituted-aromatic carboxylic acid salts, specifically substituted and unsubstituted benzoate salts.

The electret webs may be in a variety of forms. For example the web may be a continuous or discontinuous film, or a fibrous web. Fibrous webs are particularly useful for the formation of filtration medium. In some embodiments the web is a non-woven microfibrous web. Typically microfibers are 1-100 micrometers, or more typically 2-30 micrometers in effective diameter (or average diameter if measured by a method such as scanning electron microscopy) and the microfibers need not have a circular cross-section.

The terms "a", "an", and "the" are used interchangeably with "at least one" to mean one or more of the elements being described.

The term "electret" refers to a material that exhibits a quasi-permanent electric charge. The electric charge may be characterized by the X-ray Discharge Test as described in the examples section.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl (t-butyl), n-pentyl, n-hexyl, cyclohexyl, n-heptyl, n-octyl, and ethylhexyl.

The term "heteroalkyl" refers to an alkyl group which contains heteroatoms. These heteroatoms may be pendant atoms, for example, halogens such as fluorine, chlorine, bromine, or iodine or catenary atoms such as nitrogen, oxygen or sulfur. An example of a heteroalkyl group is a polyoxyalkyl group such as $-CH_2CH_2(OCH_2CH_2)_nOCH_2CH_3$.

The term "alkoxy" refers to a group of the type -OR, where R is an alkyl, substituted alkyl, aryl, or aralkyl group.

The term "substituted alkyl" refers to an alkyl group which contains substituents along the hydrocarbon backbone. These substituents may be alkyl groups, heteroalkyl groups or aryl groups. An example of a substituted alkyl group is a benzyl group.

The term "aryl" refers to an aromatic carbocyclic group that is a radical containing 1 to 5 rings which may be connected or fused. The aryl group may be substituted with alkyl or heteroalkyl groups. Examples of aryl groups include phenyl groups, naphthalene groups and anthracene groups.

The terms "polymer" and "polymeric material" refer to both materials prepared from one monomer such as a homopolymer or to materials prepared from two or more monomers such as a copolymer, terpolymer, or the like. Likewise, the term "polymerize" refers to the process of making a polymeric material that can be a homopolymer, copolymer, terpolymer, or the like. The terms "copolymer" and "copolymeric material" refer to a polymeric material prepared from at least two monomers.

The terms "room temperature" and "ambient temperature" are used interchangeably to mean temperatures in

the range of 20°C to 25°C.

The term "hot melt processable" as used herein, refers to a composition that can transform, for example, by heat and pressure from a solid to a viscous fluid. The composition should be capable of being hot melt processed without being substantially chemically transformed, degraded or rendered unusable for the intended application.

Unless otherwise indicated, all numbers expressing feature sizes, amounts, and physical properties used in the specification and claims are to be understood as being modified in all instances by the term "about." Accordingly, unless indicated to the contrary, the numbers set forth are approximations that can vary depending upon the desired properties using the teachings disclosed herein.

Thermoplastic resins useful in the present disclosure include any thermoplastic nonconductive polymer capable of retaining a high quantity of trapped electrostatic charge when formed into a web and charged. Typically, such resins have a DC (direct current) resistivity of greater than $10^{14}$ ohm-cm at the temperature of intended use. Polymers capable of acquiring a trapped charge include polyolefins such as polypropylene, polyethylene, and poly-4-methyl-1-pentene; polyvinyl chloride; polystyrene; polycarbonates; polyesters, including polylactides; and perfluorinated polymers and copolymers. Particularly useful materials include polypropylene, poly-4-methyl-1-pentene, blends thereof or copolymers formed from at least one of propylene and 4-methyl-1-pentene.

Examples of suitable thermoplastic resins include, for example, the polypropylene resins: ESCORENE PP 3746G commercially available from Exxon-Mobil Corporation, Irving, TX; TOTAL PP3960, TOTAL PP3860, and TOTAL PP3868 commercially available from Total Petrochemicals USA Inc., Houston, TX; and METOCENE MF 650W commercially available from LyondellBasell Industries, Inc., Rotterdam, Netherlands; and the poly-4-methyl-1-pentene resin TPX-MX002 commercially available from Mitsui Chemicals, Inc., Tokyo, Japan.

The charge-enhancing additives are substituted- or unsubstituted-aromatic carboxylate salts, typically, substituted or unsubstituted benzoate salts. These salts can be described by the general structure of Formula 1 shown below:

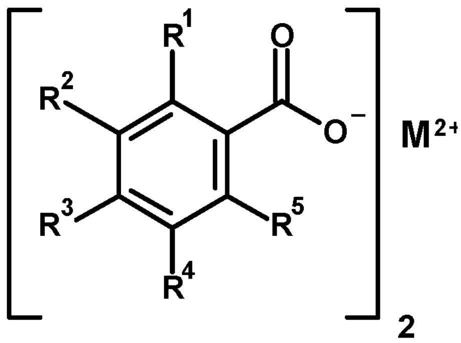

Formula 1

wherein the groups $R^1$, $R^2$, $R^3$, $R^4$, and $R^5$ independently comprise a hydrogen atom, an alkyl, an aryl, a substituted alkyl, or a hydroxyl (-OH) group; and M is a metal ion with a valency of 2.

In some embodiments, the charge enhancing additive has the structure of general Formula 1 with each $R^1$, $R^2$, $R^3$, $R^4$, and $R^5$ comprise a hydrogen atom. In other embodiments, $R^1$ comprises a -OH group, and $R^2$, $R^3$, $R^4$, and $R^5$ comprise a hydrogen atom. In other embodiments, each $R^1$, $R^2$, $R^4$, and $R^5$ comprise a hydrogen atom, and $R^3$ is an alkyl group. The metal ion M is a divalent metal ion selected from magnesium (Mg) and zinc (Zn).

In some embodiments, the charge enhancing additive has the structure of Formula 1A each $R^1$, $R^2$, $R^4$, and $R^5$ comprise a hydrogen atom, $R^3$ comprise a alkyl group with 3 carbon atoms, and M is zinc (Zn).

In some embodiments, the charge enhancing additive has the structure of Formula 1B each $R^1$, $R^2$, $R^3$, $R^4$, and $R^5$ comprise a hydrogen atom, and M is zinc (Zn).

In some embodiments, the charge enhancing additive has the structure of Formula 1C each $R^1$, $R^2$, $R^3$, $R^4$, and $R^5$ comprise a hydrogen atom, and M is magnesium (Mg).

In some embodiments, the charge enhancing additive has the structure of Formula 1D each $R^2$, $R^3$, $R^4$, and $R^5$ comprise a hydrogen atom, $R^1$ is a -OH group, and M is magnesium (Mg).

Some particularly suitable examples of compounds of Formula 1 that have been described above, are shown below as Formula 1A, 1B, 1C, and 1D below:

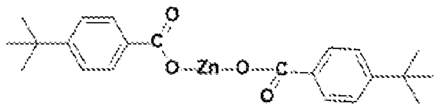

Formula 1A

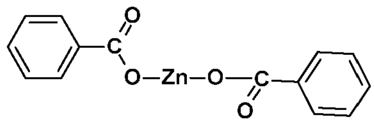

Formula 1B

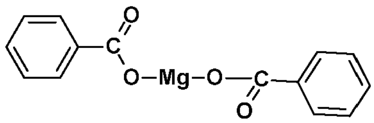

Formula 1C

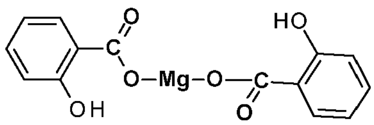

Formula 1D

Combinations of charging additives of general Formula 1 may also be used.

The charge-enhancing additive can be added in any suitable amount. The charge-enhancing additives of this disclosure have been shown to be effective even in relatively small quantities. Typically, the charge-enhancing additive is present in a thermoplastic resin and charge-enhancing additive blend in amounts of up to about 10 % by weight, more typically in the range of 0.02 to 5 % by weight based upon the total weight of the blend. In some embodiments, the charge-enhancing additive is present in an amount ranging from 0.1 to 3 % by weight, 0.1 to 2% by weight, 0.2 to 1.0 % by weight, or 0.25 to 0.5 % by weight.

The blend of the thermoplastic resin and the charge-enhancing additive can be prepared by well-known methods. Typically, the blend is processed using melt extrusion techniques, so the blend may be preblended to form pellets in a batch process, or the thermoplastic resin and the charge-enhancing additive may be mixed in the extruder in a continuous process. Where a continuous process is used, the thermoplastic resin and the charge-enhancing additive may be pre-mixed as solids or added separately to the extruder and allowed to mix in the molten state.

Examples of melt mixers that may be used to form preblended pellets include those that provide dispersive mixing, distributive mixing, or a combination of dispersive and distributive mixing. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CT). After batch mixing, the mixture created may be immediately quenched and stored below the melting temperature of the mixture for later processing.

Examples of continuous methods include single screw extruding, twin screw extruding, disk extruding, reciprocating single screw extruding, and pin barrel single screw extruding. The continuous methods can include utilizing both distributive elements, such as cavity transfer mixers (e.g. CTM, commercially available from RAPRA Technology, Ltd.; Shrewsbury, England) and pin mixing elements, static mixing elements or dispersive mixing elements (commercially available from e.g., MADDOCK mixing elements or SAXTON mixing elements).

Examples of extruders that may be used to extrude preblended pellets prepared by a batch process include the same types of equipment described above for continuous processing. Useful extrusion conditions are generally those which are suitable for extruding the resin without the additive.

The extruded blend of thermoplastic resin and charge-enhancing additive may be cast or coated into films or sheets or may be formed into a fibrous web using any suitable techniques. Films can be made into a variety of articles including filtration media by the methods described in, for example, US Patent No. 6,524,488 (Insley et al.). Fibrous webs can be made from a variety of fiber types including, for example, melt-blown microfibers, staple fibers, fibrillated

films, and combinations thereof. Techniques for preparing fibrous webs include, for example, air laid processes, wet laid processes, hydro-entanglement, spunbond processes, melt-blown processes, and combinations thereof. Melt-blown and spunbond, non-woven microfibrous webs are particularly useful as filtration media.

Melt-blown and spunbond, non-woven microfibrous electret filters are especially useful as an air filter element of a respirator, such as a filtering facepiece, or for such purposes as home and industrial air-conditioners, air cleaners, vacuum cleaners, medical air line filters, and air conditioning systems for vehicles and common equipment, such as computers, computer disk drives and electronic equipment. In some embodiments, the electret filters are combined with a respirator assembly to form a respiratory device designed to be used by a person. In respirator uses, the electret filters may be in the form of molded, pleated, or folded half-face respirators, replaceable cartridges or canisters, or prefilters.

Melt-blown microfibers useful in the present disclosure can be prepared as described in Van A. Wente, "Superfine Thermoplastic Fibers," Industrial Engineering Chemistry, vol. 48, pp. 1342-1346 and in Report No. 4364 of the Naval Research Laboratories, published May 25, 1954, entitled "Manufacture of Super Fine Organic Fibers" by Van A. Wente et al.

Spunbond microfibers may be formed using a spunbond process in which one or more continuous polymeric free-fibers are extruded onto a collector, as described, for example, in US Patent Nos. 4,340,563 and 8,162,153 and US Patent Publication No. 2008/0038976.

Useful melt-blown and spunbond microfibers for fibrous electret filters typically have an effective fiber diameter of from about 1-100 micrometers, more typically 2 to 30 micrometers, in some embodiments from about 7 to 15 micrometers, as calculated according to the method set forth in Davies, C. N., "The Separation of Airborne Dust and Particles," Institution of Mechanical Engineers, London, Proceedings 1B, 1952.

Staple fibers may also be present in the web. The presence of staple fibers generally provides a more lofty, less dense web than a web of only blown microfibers. Generally, no more than about 90 weight percent staple fibers are present, more typically no more than about 70 weight percent. Examples of webs containing staple fiber are disclosed in US Patent No. 4,118,531 (Hauser).

Sorbent particulate material such as activated carbon or alumina may also be included in the web. Such particles may be present in amounts up to about 80 volume percent of the contents of the web. Examples of particle-loaded webs are described, for
example, in US Patent No. 3,971,373 (Braun), US Patent No. 4,100,324 (Anderson) and US Patent No. 4,429,001 (Kolpin et al.).

Various optional additives can be blended with the thermoplastic composition including, for example, pigments, light stabilizers, primary and secondary antioxidants, metal deactivators, hindered amines, hindered phenols, fatty acid metal salts, triester phosphites, phosphoric acid salts, nucleating agents, fluorine-containing compounds and combinations thereof. Particularly suitable additives include HALS (Hindered Amine Light Stabilizers) and antioxidants, as these may also act as charge-enhancing additives. In addition, other charge-enhancing additives may be combined with the thermoplastic composition. Possible charge additives include thermally stable organic triazine compounds or oligomers, which compounds or oligomers contain at least one nitrogen atom in addition to those in the triazine ring, see, for example, U.S. Patent Nos 6,268,495, 5,976,208, 5,968,635, 5,919,847, and 5,908,598 to Rousseau et al. Another additive known to enhance electrets is "CHIMASSORB 944: (poly[[6-(1,1,3,3,-tetramethylbutyl) amino]-s-triazine-2,4-diyl][[(2,2,6,6-tetramethyl-4-piperidyl) imino] hexamethylene [(2,2,6,6-tetramethyl-4-piperidyl) imino]]), available from BASF, Ludwigshafen, Germany. The charge-enhancing additives may be N-substituted amino aromatic compounds, particularly triamino substituted compounds, such as 2,4,6-trianilino-p-(carbo-2'-ethylhexyl-1'-oxy)-1,3,5-triazine commercially available as "UVINUL T-150" from BASF, Ludwigshafen, Germany. Another charge additive is 2,4,6-tris-(octadecylamino)-triazine, also known as tristearyl melamine ("TSM"). Further examples of charge-enhancing additives are provided in WO 2009/148747, WO 2009/148744, US Patent No. 7,390,351 (Leir et al.), US Patent No. 5,057,710 (Nishiura et al.), and US Patent Nos. 4,652,282 and 4,789,504 (Ohmori et al.).

In addition, the web may be treated to chemically modify its surface. Surface fluorination can be achieved by placing a polymeric article in an atmosphere that contains a fluorine-containing species and an inert gas and then applying an electrical discharge to modify the surface chemistry of the polymeric article. The electrical discharge may be in the form of a plasma such as an AC corona discharge. This plasma fluorination process causes fluorine atoms to become present on the surface of the polymeric article. The plasma fluorination process is described in a number of U.S. Patents: 6,397,458, 6,398,847, 6,409,806, 6,432,175, 6,562,112, 6,660,210, and 6,808,551 to Jones/Lyons et al. Electret articles that have a high fluorosaturation ratio are described in U.S. Patent 7,244,291 to Spartz et al., and electret articles that have a low fluorosaturation ratio, in conjunction with heteroatoms, is described in U.S. Patent 7,244,292 to Kirk et al. Other publications that disclose fluorination techniques include: U.S. Pat. Nos. 6,419,871, 6,238,466, 6,214,094, 6,213,122, 5,908,598, 4,557,945, 4,508,781, and 4,264,750; U.S. Publications US 2003/0134515 A1 and US 2002/0174869 A1; and International Publication WO 01/07144.

The electret filter media prepared according to the present disclosure generally have a basis weight (mass per unit area) in the range of about 10 to 500 $g/m^2$, and in some embodiments, about 10 to 100 $g/m^2$. In making melt-blown

microfiber webs, the basis weight can be controlled, for example, by changing either the collector speed or the die throughput. The thickness of the filter medium is typically about 0.25 to 20 millimeters, and in some embodiments, about 0.5 to 2 millimeters. Multiple layers of fibrous electret webs are commonly used in filter elements. The solidity of the fibrous electret web typically is about 1% to 25%, more typically about 3% to 10%. Solidity is a unitless parameter that defines the solids fraction of the web. Generally the methods of this disclosure provide electret webs with generally uniform charge distribution throughout the web without regard to basis weight, thickness, or solidity of the medium. The electret filter medium and the resin from which it is produced should not be subjected to any unnecessary treatment which might increase its electrical conductivity, e.g., exposure to ionizing radiation, gamma rays, ultraviolet irradiation, pyrolysis, oxidation, etc.

The electret web may be charged as it is formed or the web may be charged after the web is formed. In electret filter medium, the medium is generally charged after the web is formed. In general, any standard charging method known in the art may be used. For example, charging may be carried out in a variety of ways, including tribocharging, corona discharge and hydrocharging. A combination of methods may also be used. As mentioned above, in some embodiments, the electret webs of this disclosure have the desirable feature of being capable of being charged by corona discharge alone, particularly DC corona discharge, without the need of additional charging methods.

Examples of suitable corona discharge processes are described in US Patent Re. No. 30,782 (van Turnhout), US Patent Re. No. 31,285 (van Turnhout), US Patent Re. No. 32,171 (van Turnhout), US Patent No. 4,215,682 (Davis et al.), US Patent No. 4,375,718 (Wadsworth et al.), US Patent No. 5,401,446 (Wadsworth et al.), US Patent No. 4,588,537 (Klaase et al.), US Patent No. 4,592,815 (Nakao), and US Patent No. 6,365,088 (Knight et al.).

Another technique that can be used to charge the electret web is hydrocharging. Hydrocharging of the web is carried out by contacting the fibers with water in a manner sufficient to impart a charge to the fibers, followed by drying of the web. One example of hydrocharging involves impinging jets of water or a stream of water droplets onto the web at a pressure sufficient to provide the web with filtration enhancing electret charge, and then drying the web. The pressure necessary to achieve optimum results varies depending on the type of sprayer used, the type of polymer from which the web is formed, the type and concentration of additives to the polymer, the thickness and density of the web and whether pre-treatment, such as corona surface treatment, was carried out prior to hydrocharging. Generally, water pressures in the range of about 10 to 500 psi (69 to 3450 kPa) are suitable. The jets of water or stream of water droplets can be provided by any suitable spray device. One example of a useful spray device is the apparatus used for hydraulically entangling fibers. An example of a suitable method of hydrocharging is described in US Patent No. 5,496,507 (Angadjivand et al.). Other methods are described in US Patent No. 6,824,718 (Eitzman et al.), US Patent No. 6,743,464 (Insley et al.), US Patent No. 6,454,986 (Eitzman et al.), US Patent No. 6,406,657 (Eitzman et al.), and US Patent No. 6,375,886 (Angadjivand et al.). The hydrocharging of the web may also be carried out using the method disclosed in the US Patent No. 7,765,698 (Sebastian et al.).

To assess filtration performance, a variety of filtration testing protocols has been developed. These tests include measurement of the aerosol penetration of the filter web using a standard challenge aerosol such as dioctylphthalate (DOP), which is usually presented as percent of aerosol penetration through the filter web (% Pen) and measurement of the pressure drop across the filter web ($\Delta P$). From these two measurements, a quantity known as the Quality Factor (QF) may be calculated by the following equation:

$$QF = - \ln(\%\ Pen/100)/\ \Delta P,$$

where ln stands for the natural logarithm. A higher QF value indicates better filtration performance, and decreased QF values effectively correlate with decreased filtration performance. Details for measuring these values are presented in the Examples section. Typically, the filtration medium of this disclosure have measured QF values of 0.3 (mm of $H_2O)^{-1}$ or greater at a face velocity of 6.9 centimeters per second.

To verify that a particular filter medium is electrostatically charged in nature, one may examine its performance before and after exposure to ionizing X-ray radiation. As described in the literature, for example, Air Filtration by R.C. Brown (Pergamon Press, 1993) and "Application of Cavity Theory to the Discharge of Electrostatic Dust Filters by X-Rays", A. J. WAKER and R. C. BROWN, Applied Radiation and Isotopes, Vol. 39, No. 7, pp. 677-684, 1988, if an electrostatically charged filter is exposed to X-rays, the penetration of an aerosol through the filter will be greater after exposure than before exposure, because the ions produced by the X-rays in the gas cavities between the fibers will have neutralized some of the electric charge. Thus, a plot of penetration against cumulative X-ray exposure can be obtained which shows a steady increase up to a constant level after which further irradiation causes no change. At this point all of the charge has been removed from the filter.

These observations have led to the adoption of another testing protocol to characterize filtration performance, the X-ray Discharge Test. In this testing protocol, select pieces of the filter medium to be tested are subjected to X-ray radiation to discharge the electret web. One attribute of this test is that it confirms that the web is an electret. Because

it is known that X-rays quench electret charge, exposure of a filter medium to X-rays and measuring the filter performance before and after this exposure and comparing the filter performances indicates whether the filter medium is an electret. If the filter performance is unchanged after exposure to X-ray radiation, that is indicative that no charge was quenched and the material is not an electret. However, if the filter performance diminishes after exposure to X-ray radiation, that is indicative that the filter medium is an electret.

When the test is run, typically, the filtration performance is measured before and after exposure of the filter medium to the X-ray radiation. A % Penetration Ratio can be calculated according to the following equation: % Penetration Ratio = (ln(initial % DOP Penetration/100)/(ln(% DOP Penetration after 60 min of X-ray exposure/100)))x 100, when tested according to the Filtration Performance Test Method, as described in the Examples section below. In order for the web to have sufficient charge for use as a filter, the % Penetration Ratio is typically at least 300%. As the % Penetration Ratio increases, the filtration performance of the web also increases. In some embodiments, the % Penetration Ratio is at least 400%, 500%, or 600%. In preferred embodiments, the % Penetration Ratio is at least 750% or 800%. In some embodiments, the web exhibits a % Penetration Ratio of at least 1000%, or at least 1250%.

The initial Quality Factor (prior to exposure to X-rays) is typically at least 0.3 (mm of $H_2O)^{-1}$, more typically at least 0.4 or even 0.5 (mm of $H_2O)^{-1}$ for a face velocity of 6.9 cm/s when tested according to the Filtration Performance Test Method, as described in the Examples section below. In some embodiments, the initial Quality Factor is at least 0.6 or 0.7 (mm of $H_2O)^{-1}$. In other embodiments, the initial Quality Factor is at least 0.8, at least 0.90, at least 1.0, or even greater than 1.0 (mm of $H_2O)^{-1}$. The Quality Factor after 60 minutes exposure to X-rays is typically less than 50% of the initial Quality Factor. In some embodiments, the initial Quality Factor is at least 0.5 (mm of $H_2O)^{-1}$ or greater and the Quality Factor after 60 minutes exposure to X-rays is less than 0.15 (mm of $H_2O)^{-1}$.

## Examples

This invention discloses electret filter media that comprises a fibrous web. The electric webs include a thermoplastic resin such as polypropylene (PP) and melt processable charge enhancing additive compositions. The melt additive compositions comprise at least one component or mixtures of the additives in Table-1.

## Charge Additives and Polypropylene (PP) Resin

The additives used in this invention are commercially available. The detailed information about each additive is tabulated in Table-1. The PP resin used in this invention for making webs is commercially available and was primarily used as received from the vendor.

**Table-1: Polypropylene Resin and Charging Additives Information**

| Material No. | Code Name | Chemical Structure | Description and Company |
|---|---|---|---|
| 1 | CA-1 | 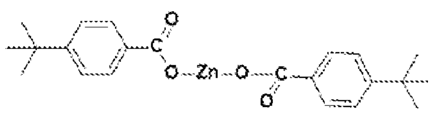 | CAS: 4980-54-5<br>Zinc P-T-Butyl Benzoate Wako Pure Chemical |
| 2 | CA-2 | 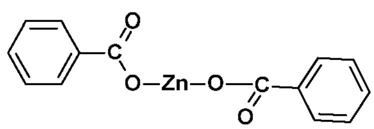 | CAS: 553-72-0<br>Zinc Benzoate<br>Pfaltz Bauer |
| 3 | CA-3 | 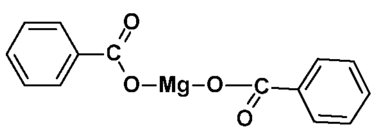 | CAS:553-70-8<br>Magnesium Benzoate<br>Pfaltz Bauer |
| 4 | CA-4 | 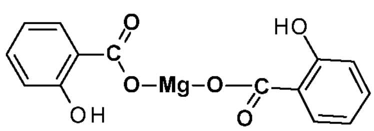 | CAS: 18917-95-8<br>Magnesium Salicylate<br>Spectrum |
| 5 | PP-1 | Polyproplyne PP650X | Melt Flow Index<br>(MFI): 1200;<br>LyondellBasell, TX |

(continued)

| Material No. | Code Name | Chemical Structure | Description and Company |
|---|---|---|---|
| 6 | PP-2 | Polyproplyne PP650W | Melt Flow Index (MFI): 800; LyondellBasell, TX |

**Step-A: Preparation of Melt-Blown Microfiber (BMF) Webs:**

Extrusion was performed generally as described in Van A. Wente, Superfine Thermoplastic Fibers, 48 INDUST. ENGN. CHEM., 1342-46 and Naval Research Laboratory Report 111437 (Apr. 15, 1954) via the extrusion method of using an extruder operating at a temperature of about 220° C to 330° C. connected to a melt blowing die having 10 holes per centimeter (25 holes per inch) and 0.38 mm (0.015 in) diameter holes, BMF webs were formed having basis weights of about 45-70 g/m$^2$, effective fiber diameters of about 6.5-10 micrometers, solidities of about 4-10%, and thicknesses of about 0.6-2.5 millimeters. Charging additives were fed directly into the extruder with the resin, either as dry powder or as the compounds containing 10-30 wt % additive concentrates. Table-2 summarizes the specific web characteristics and concentration(s) of charging additives for each of the Examples and Comparative Examples.

**Table-2: The Compositions and Specific Characteristics of BMF Webs samples**

| Web No. | Web Compositions | | | Basis Weight (g/m$^2$) | Solidity (%) | EFD ($\mu$m) |
|---|---|---|---|---|---|---|
| | PP | Additive | Additive (wt%) | | | |
| 1 | PP-1 | None | 0.00 | 57.3 | 6.2 | 8.0 |
| 2 | PP-1 | CA-1 | 0.20 | 56.6 | 6.3 | 7.8 |
| 3 | PP-1 | CA-2 | 0.20 | 56.6 | 6.6 | 8.0 |
| 4 | PP-1 | CA-3 | 0.20 | 56.6 | 6.4 | 8.2 |
| 5 | PP-1 | CA-4 | 0.10 | 55.1 | 6.3 | 8.1 |
| 6 | PP-1 | CA-4 | 0.30 | 55.1 | 6.4 | 8.2 |
| 7 | PP-2 | None | 0.00 | 54.4 | 6.8 | 7.9 |
| 8 | PP-2 | CA-3 | 0.20 | 55.1 | 6.6 | 8.2 |
| 9 | PP-2 | CA-4 | 0.20 | 55.1 | 6.6 | 8.0 |
| 10 | PP-2 | CA-2 | 0.20 | 53.7 | 6.5 | 7.9 |
| 11 | PP-2 | CA-1 | 0.20 | 54.0 | 6.4 | 8.0 |

**Step B-Electret Preparation:**

Samples of each BMF web prepared in Step A above were charged by the following three charging methods and procedures. The designated charging method applied to each of comparative examples and examples are tabulated in Table-3

**Charging Method 1 - Corona Charging:**

The selected melt-blown webs prepared above were charged by DC corona discharge. The corona charging was accomplished by passing the web on a grounded surface under a corona wire source with a corona current of about 0.01 milliamp per centimeter of discharge source length at a rate of about 3 centimeters per second. The corona source was about 3.5 centimeters above the grounded surface on which the web was carried. The corona source was driven by a positive DC voltage.

Likewise, for each Comparative Example, a melt-blown web was prepared from the same grade of polypropylene as the corresponding Examples web, but no charge additive was added.

**Charging Method 2 - Corona Pre-treatment and Hydrocharging:**

The selected melt-blown webs prepared in Step A above were pretreated by DC corona discharge as described in Charging Method 1 and then charged by hydrocharging as described in the following procedure:

A fine spray of high purity water having a conductivity of less than 5 microS/cm was continuously generated from a nozzle operating at a pressure of 896 kiloPascals (130 psig) and a flow rate of approximately 1.4 liters/minute. The selected melt-blown webs prepared in Step A were conveyed by a porous belt through the water spray at a speed of approximately 10 centimeters/second while a vacuum simultaneously drew the water through the web from below. Each melt-blown web was run through the hydrocharger twice (sequentially once on each side) and then allowed to dry completely overnight prior to filter testing.

**Filtration results of Example E1-E18 and Comparative Example C1-C4**

For each Comparative Example, a blown microfiber (BMF) nonwoven web was extruded using the polymeric resin listed in the Table-1.

For each Example, the extruded blown microfiber (BMF) nonwoven web comprises the polypropylene resin listed in the Table-1 and one of the charging additives or a combination thereof listed in the Table-1.

The comparative examples and examples were charged either by the charging method-1 or the charging method-2. The quality factors (QFs) & charge retention are listed in the Table-3.

**Table-3: Electret media Examples and Comparative Examples**

| Ex. No. | Web No. | Sample composition & Concentrations | | | $Q_0$ | $Q_3$ | $Q_3/Q_0$ | Charging Method |
|---|---|---|---|---|---|---|---|---|
| | | Resin Code | Charging Additive Code | Concentration (wt%) | | | | |
| C-1 | 1 | PP-1 | None | 0.00 | 0.18 | 0.11 | 0.59 | 1 |
| **E-1** | **2** | **PP-1** | **CA-1** | **0.20** | **0.27** | **0.17** | **0.62** | **1** |
| **E-2** | **3** | **PP-1** | **CA-2** | **0.20** | **0.25** | **0.19** | **0.74** | **1** |
| **E-3** | **4** | **PP-1** | **CA-3** | **0.20** | **0.27** | **0.19** | **0.71** | **1** |
| **E-4** | **5** | **PP-1** | **CA-4** | **0.10** | **0.20** | **0.17** | **0.84** | **1** |
| **E-5** | **6** | **PP-1** | **CA-4** | **0.30** | **0.21** | **0.17** | **0.80** | **1** |
| C-2 | 7 | PP-2 | None | 0.00 | 0.24 | 0.17 | 0.74 | 1 |
| **E-6** | **8** | **PP-2** | **CA-3** | **0.20** | **0.32** | **0.23** | **0.73** | **1** |
| **E-7** | **9** | **PP-2** | **CA-4** | **0.20** | **0.26** | **0.17** | **0.65** | **1** |
| **E-8** | **10** | **PP-2** | **CA-2** | **0.20** | **0.33** | **0.30** | **0.91** | **1** |
| **E-9** | **11** | **PP-2** | **CA-1** | **0.20** | **0.28** | **0.28** | **0.97** | **1** |
| C-3 | 1 | PP-1 | None | 0.00 | 0.39 | 0.32 | 0.82 | 2 |
| **E-10** | **2** | **PP-1** | **CA-1** | **0.20** | **0.58** | **0.58** | **1.00** | **2** |
| **E-11** | **3** | **PP-1** | **CA-2** | **0.20** | **0.56** | **0.53** | **0.95** | **2** |
| **E-12** | **4** | **PP-1** | **CA-3** | **0.20** | **0.58** | **0.46** | **0.78** | **2** |
| **E-13** | **5** | **PP-1** | **CA-4** | **0.10** | **0.50** | **0.41** | **0.81** | **2** |
| **E-14** | **6** | **PP-1** | **CA-4** | **0.30** | **0.50** | **0.41** | **0.83** | **2** |
| C-4 | 7 | PP-2 | None | 0.00 | 0.30 | 0.23 | 0.75 | 2 |
| **E-15** | **8** | **PP-2** | **CA-3** | **0.20** | **0.42** | **0.37** | **0.87** | **2** |
| **E-16** | **9** | **PP-2** | **CA-4** | **0.20** | **0.42** | **0.33** | **0.78** | **2** |
| **E-17** | **10** | **PP-2** | **CA-2** | **0.20** | **0.57** | **0.55** | **0.96** | **2** |
| **E-18** | **11** | **PP-2** | **CA-1** | **0.20** | **0.53** | **0.54** | **1.01** | **2** |

## Claims

1. An electret web comprising:

a thermoplastic resin; and
a charge-enhancing additive comprising a benzoate salt with the general structure of Formula 1:

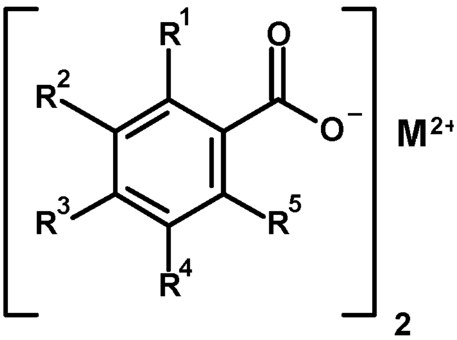

Formula 1

wherein the groups $R^1$, $R^2$, $R^3$, $R^4$, and $R^5$ independently comprise a hydrogen atom, an alkyl, an aryl, a substituted alkyl, or a -OH group; and
M is a metal ion with a valency of 2
wherein the web includes a blend of the thermoplastic resin and the charge-enhancing additive.

2. The electret web of claim 1, wherein the charge-enhancing additive has the general structure of Formula 1:

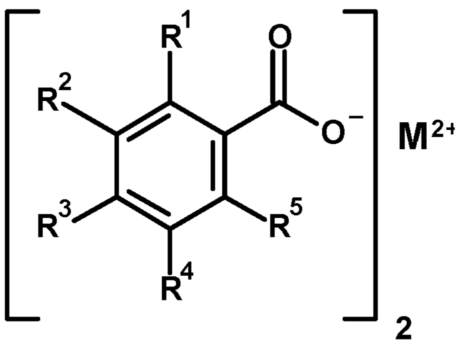

Formula 1

wherein the groups $R^1$, $R^2$, $R^3$, $R^4$, and $R^5$ independently comprise a hydrogen atom; and M comprises Zn or Mg.

3. The electret web of claim 1, wherein the charge enhancing additive has the general structure of Formula 1:

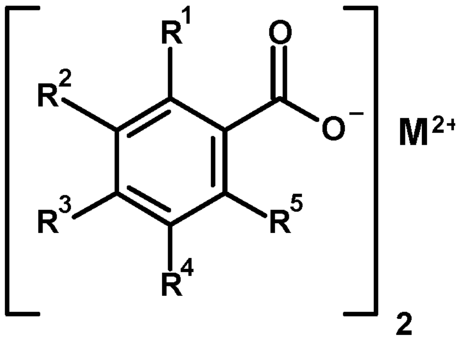

Formula 1

wherein the groups $R^2$, $R^3$, $R^4$, and $R^5$ independently comprise a hydrogen atom;
$R^1$ is a -OH group; and
M is Zn or Mg.

4. The electret web of claim 1, wherein the charge enhancing additive is the benzoate salt of Formula 1A:

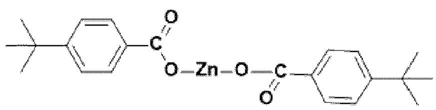

Formula 1A.

5. The electret web of claim 1, wherein the charge enhancing additive is the benzoate salt of Formula 1B:

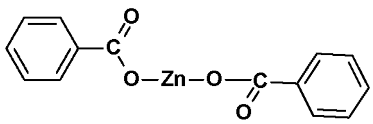

Formula 1B.

6. The electret web of claim 1, wherein the charge enhancing additive is the benzoate salt of Formula 1C:

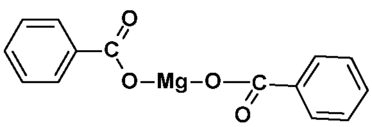

Formula 1C.

7. The electret web of claim 1, wherein the charge enhancing additive is the benzoate salt of Formula 1D:

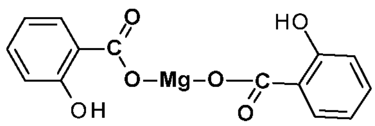

Formula 1D.

8. An electret filter medium comprising:
a web comprising:
a thermoplastic resin; and

a charge-enhancing additive comprising a benzoate salt with the general structure of Formula 1:

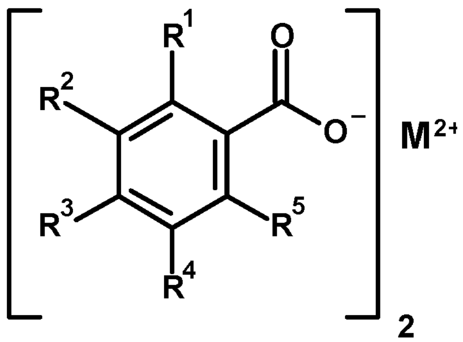

Formula 1

wherein the groups $R^1$, $R^2$, $R^3$, $R^4$, and $R^5$ independently comprise a hydrogen atom, an alkyl, an aryl, a substituted alkyl, or a -OH group; and
M is a metal ion with a valency of 2,
wherein the web includes a blend of the thermoplastic resin and the charge-enhancing additive.

**9.** The electret filter medium of claim 8, wherein the charge-enhancing additive has the general structure of Formula 1:

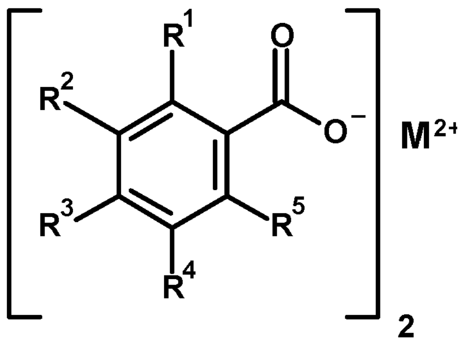

Formula 1

wherein the groups $R^1$, $R^2$, $R^3$, $R^4$, and $R^5$ independently comprise a hydrogen atom; and
M comprises Zn or Mg.

**10.** The electret filter media of claim 8, wherein the charge enhancing additive has the general structure of Formula 1:

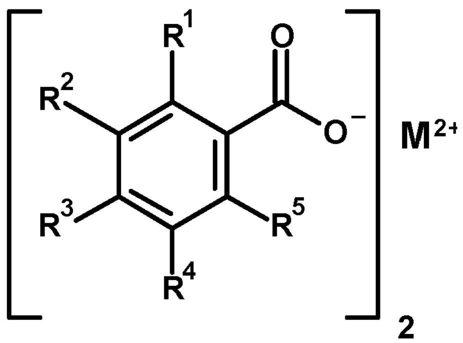

Formula 1

wherein the groups $R^2$, $R^3$, $R^4$, and $R^5$ independently comprise a hydrogen atom;
$R^1$ is a -OH group; and

M is Zn or Mg.

**11.** The electret filter medium of claim 8, wherein the charge enhancing additive is the benzoate salt of Formula 1A:

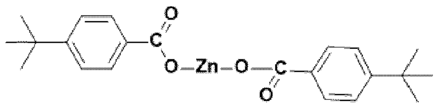

Formula 1A.

**12.** The electret filter medium of claim 8, wherein the charge enhancing additive is the benzoate salt of Formula 1B:

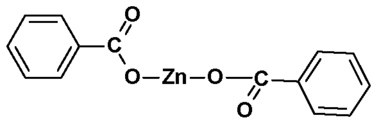

Formula 1B.

**13.** The electret filter medium of claim 8, wherein the charge enhancing additive is the benzoate salt of Formula 1C:

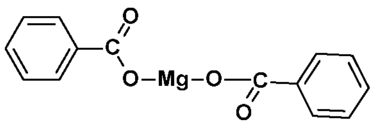

Formula 1C.

**14.** The electret filter medium of claim 8, wherein the charge enhancing additive is the benzoate salt of Formula 1D:

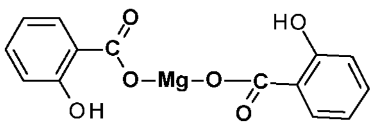

Formula 1D.

**15.** The electret filter medium of claim 8, wherein the charge enhancing additive comprises 0.02-5.0 % by weight of the web.

**Patentansprüche**

**1.** Eine Elektretbahn, umfassend:

ein thermoplastisches Harz; und
ein ladungsverstärkendes Additiv, umfassend ein Benzoatsalz mit der allgemeinen Struktur der Formel 1:

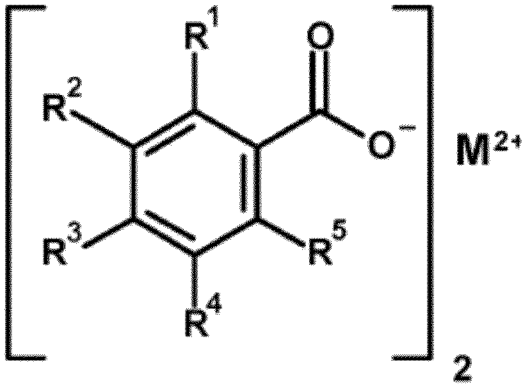

Formel 1

wobei die Gruppen $R^1$, $R^2$, $R^3$, $R^4$ und $R^5$ unabhängig voneinander ein Wasserstoffatom, ein Alkyl, ein Aryl, ein substituiertes Alkyl oder eine -OH-Gruppe umfassen; und
M ein Metallion mit einer Valenz von 2 ist,
wobei die Bahn eine Mischung aus dem thermoplastischen Harz und dem ladungsverstärkenden Additiv aufweist.

**2.** Die Elektretbahn nach Anspruch 1, wobei das ladungsverstärkende Additiv die allgemeine Struktur der Formel 1 aufweist:

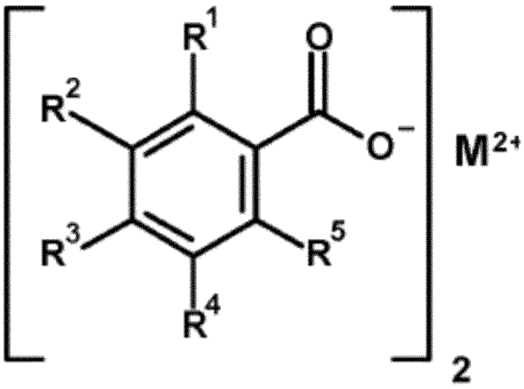

Formel 1

wobei die Gruppen $R^1$, $R^2$, $R^3$, $R^4$ und $R^5$ unabhängig voneinander ein Wasserstoffatom umfassen; und
M Zn oder Mg umfasst.

**3.** Die Elektretbahn nach Anspruch 1, wobei das ladungsverstärkende Additiv die allgemeine Struktur der Formel 1 aufweist:

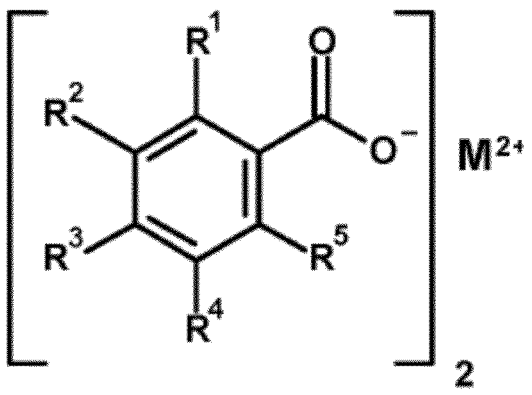

Formel 1

wobei die Gruppen $R^2$, $R^3$, $R^4$ und $R^5$ unabhängig voneinander ein Wasserstoffatom umfassen;
$R^1$ eine -OH-Gruppe ist; und
M Zn oder Mg ist.

**4.** Die Elektretbahn nach Anspruch 1, wobei das ladungsverstärkende Additiv das Benzoatsalz der Formel 1A ist:

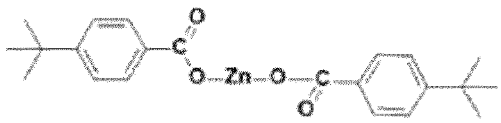

Formel 1A.

**5.** Die Elektretbahn nach Anspruch 1, wobei das ladungsverstärkende Additiv das Benzoatsalz der Formel 1B ist:

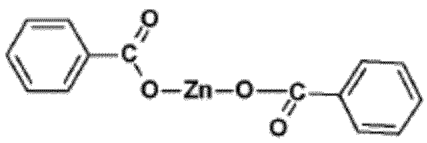

Formel 1B.

**6.** Die Elektretbahn nach Anspruch 1, wobei das ladungsverstärkende Additiv das Benzoatsalz der Formel 1C ist:

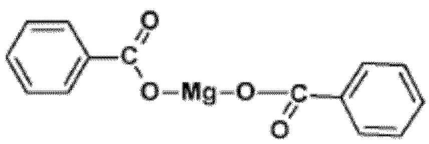

Formel 1C.

**7.** Die Elektretbahn nach Anspruch 1, wobei das ladungsverstärkende Additiv das Benzoatsalz der Formel 1D ist:

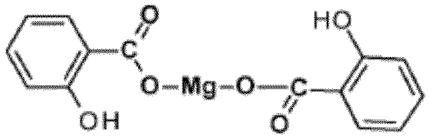

Formel 1D.

8. Ein Elektretfiltermedium, umfassend:
eine Bahn, umfassend:

ein thermoplastisches Harz; und
ein ladungsverstärkendes Additiv, umfassend ein Benzoatsalz mit der allgemeinen Struktur der Formel 1:

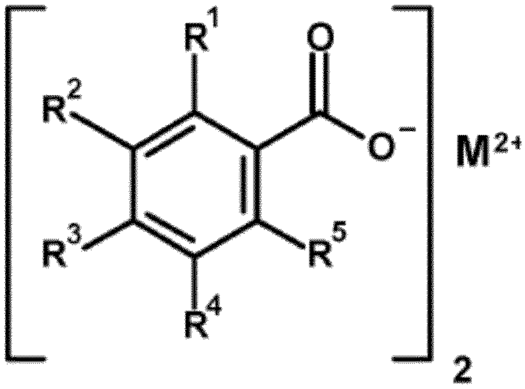

Formel 1

wobei die Gruppen $R^1$, $R^2$, $R^3$, $R^4$ und $R^5$ unabhängig voneinander ein Wasserstoffatom, ein Alkyl, ein Aryl, ein substituiertes Alkyl oder eine -OH-Gruppe umfassen; und
M ein Metallion mit einer Valenz von 2 ist,
wobei die Bahn eine Mischung aus dem thermoplastischen Harz und dem ladungsverstärkenden Additiv aufweist.

9. Das Elektretfiltermedium nach Anspruch 8, wobei das ladungsverstärkende Additiv die allgemeine Struktur der Formel 1 aufweist:

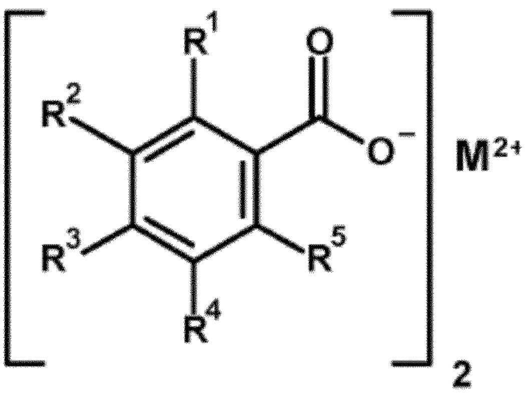

Formel 1

wobei die Gruppen $R^1$, $R^2$, $R^3$, $R^4$ und $R^5$ unabhängig voneinander ein Wasserstoffatom umfassen; und
M Zn oder Mg umfasst.

**10.** Das Elektretfiltermedium nach Anspruch 8, wobei das ladungsverstärkende Additiv die allgemeine Struktur der Formel 1 aufweist:

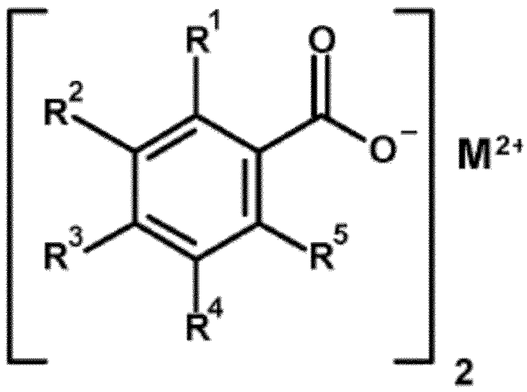

Formel 1

wobei die Gruppen $R^2$, $R^3$, $R^4$ und $R^5$ unabhängig voneinander ein Wasserstoffatom umfassen;
$R^1$ eine -OH-Gruppe ist; und
M Zn oder Mg ist.

**11.** Das Elektretfiltermedium nach Anspruch 8, wobei das ladungsverstärkende Additiv das Benzoatsalz der Formel 1A ist:

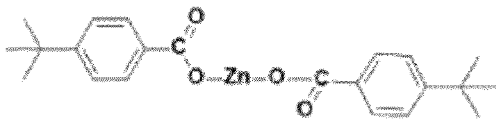

Formel 1A.

**12.** Das Elektretfiltermedium nach Anspruch 8, wobei das ladungsverstärkende Additiv das Benzoatsalz der Formel 1B ist:

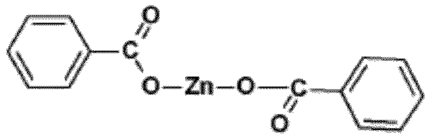

Formel 1B.

**13.** Das Elektretfiltermedium nach Anspruch 8, wobei das ladungsverstärkende Additiv das Benzoatsalz der Formel 1C ist:

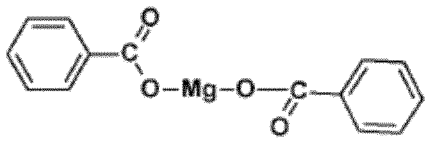

Formel 1C.

**14.** Das Elektretfiltermedium nach Anspruch 8, wobei das ladungsverstärkende Additiv das Benzoatsalz der Formel 1D ist:

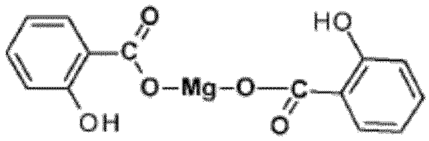

Formel 1D.

**15.** Das Elektretfiltermedium nach Anspruch 8, wobei das ladungsverstärkende Additiv zu 0,02-5,0 Gew.-% die Bahn umfasst.

**Revendications**

**1.** Bande à électret comprenant :

une résine thermoplastique ; et
un additif de renforcement de charge comprenant un sel de benzoate avec la structure générale de Formule 1 :

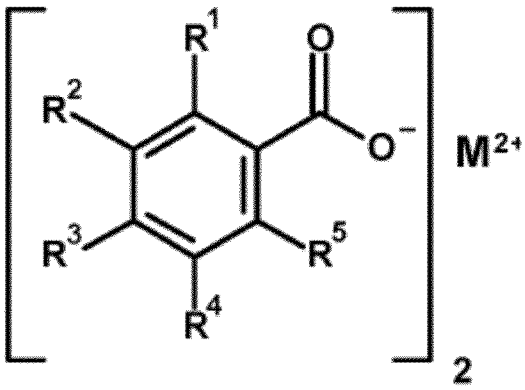

Formule 1

dans laquelle les groupes $R^1$, $R^2$, $R^3$, $R^4$ et $R^5$ comprennent indépendamment un atome d'hydrogène, un alkyle, un aryle, un alkyle substitué ou un groupe -OH ; et
M est un ion métallique avec une valence de 2
dans laquelle la bande comporte un mélange de résine thermoplastique et d'additif de renforcement de charge.

**2.** Bande à électret selon la revendication 1, dans laquelle l'additif de renforcement de charge a une structure générale de Formule 1 :

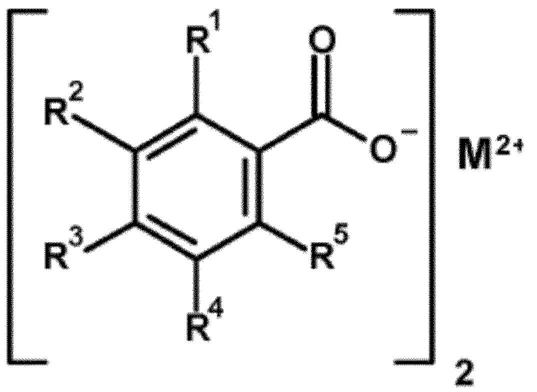

Formule 1

dans laquelle chaque $R^1$, $R^2$, $R^3$, $R^4$ et $R^5$ comprennent indépendamment un atome d'hydrogène ; et
M comprend Zn ou Mg.

3. Bande à électret selon la revendication 1, dans laquelle l'additif de renforcement de charge a la structure générale de la Formule 1 :

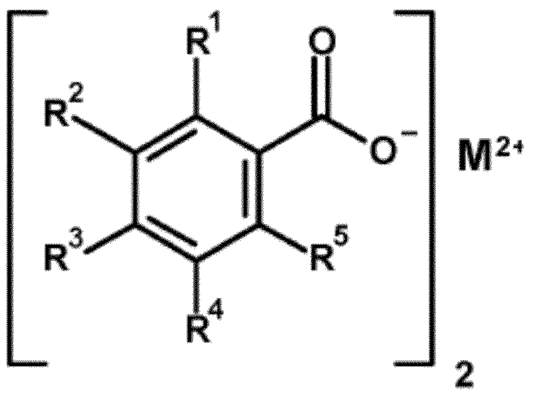

Formule 1

Dans laquelle les groupes $R^2$, $R^3$, $R^4$ et $R^5$ comprennent indépendamment un atome d'hydrogène ;
$R^1$ est un groupe -OH ; et
M est Zn ou Mg.

4. Bande à électret selon la revendication 1, dans laquelle l'additif de renforcement de charge est un sel de benzoate de Formule 1A :

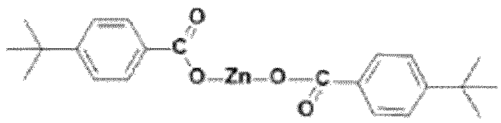

Formule 1A.

5. Bande à électret selon la revendication 1, dans laquelle l'additif de renforcement de charge est un sel de benzoate de Formule 1B :

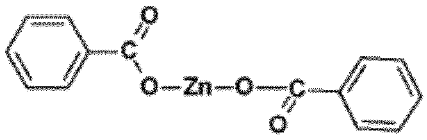

Formule 1B.

6. Bande à électret selon la revendication 1, dans laquelle l'additif de renforcement de charge est un sel de benzoate de Formule 1C :

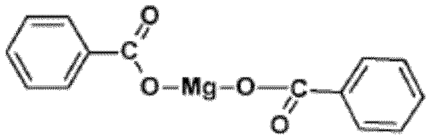

Formule 1C.

7. Bande à électret selon la revendication 1, dans laquelle l'additif de renforcement de charge est un sel benzoate substitué de formule 1D :

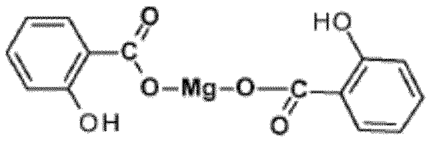

Formule 1D.

8. Milieu filtrant à électret comprenant :
une bande comprenant :

une résine thermoplastique ; et
un additif de renforcement de charge comprenant un sel de benzoate avec la structure générale de Formule 1 :

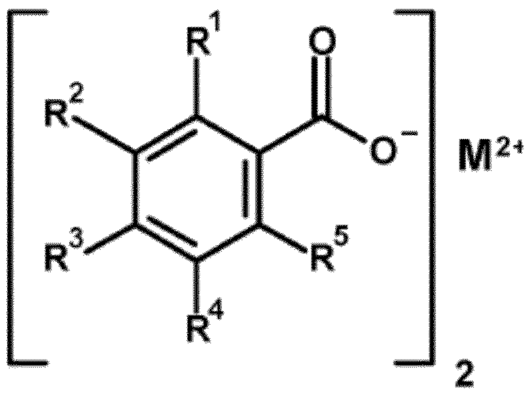

Formule 1

dans laquelle les groupes $R^1$, $R^2$, $R^3$, $R^4$ et $R^5$ comprennent indépendamment un atome d'hydrogène, un alkyle, un aryle, un alkyle substitué ou un groupe -OH ; et
M est un ion métallique avec une valence de 2,
dans laquelle la bande comporte un mélange de résine thermoplastique et d'additif de renforcement de charge.

**9.** Milieu filtrant à électret selon la revendication 8, dans lequel l'additif de renforcement de charge est une structure générale de Formule 1 :

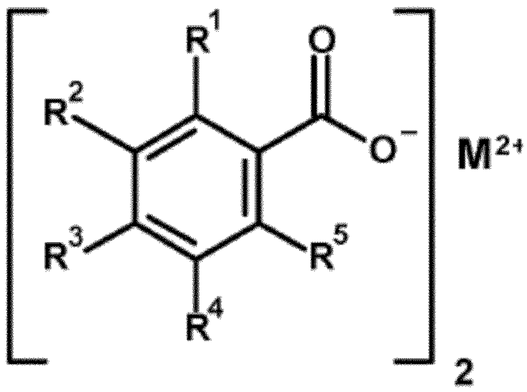

Formule 1

dans laquelle chaque $R^1$, $R^2$, $R^3$, $R^4$ et $R^5$ comprennent indépendamment un atome d'hydrogène ; et
M comprend Zn ou Mg.

**10.** Média filtrant à électret de la revendication 8, dans lequel l'additif de renforcement de charge a la structure générale de la Formule 1 :

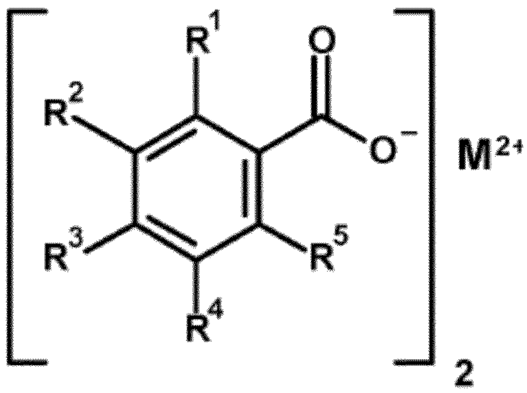

Formule 1

dans laquelle les groupes $R^2$, $R^3$, $R^4$ et $R^5$ comprennent indépendamment un atome d'hydrogène ;
$R^1$ est un groupe -OH ; et
M est Zn ou Mg.

**11.** Milieu filtrant à électret selon la revendication 8, dans lequel l'additif de renforcement de charge est un sel benzoate de Formule 1A :

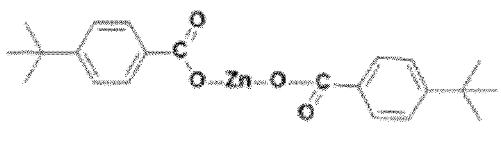

Formule 1A.

**12.** Milieu filtrant à électret selon la revendication 8, dans lequel l'additif de renforcement de charge est un sel benzoate de Formule 1B :

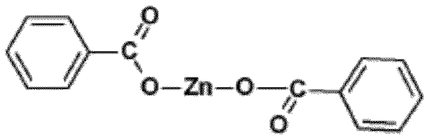

Formule 1B.

**13.** Milieu filtrant à électret selon la revendication 8, dans lequel l'additif de renforcement de charge est un sel de benzoate de Formule 1C :

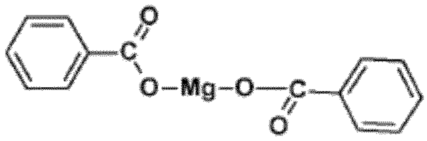

Formule 1C.

**14.** Milieu filtrant à électret selon la revendication 8, dans lequel l'additif de renforcement de charge est un sel de benzoate de Formule 1D :

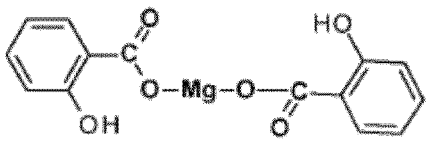

Formule 1D.

**15.** Milieu filtrant à électret selon la revendication 8, dans lequel l'additif de renforcement de charge comprend 0,02 à 5,0 % en poids de la bande.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2015137415 A1
- US 2016067717 A1
- US 6110251 A
- EP 1510241 A1
- US 6524488 B, Insley
- US 4340563 A
- US 8162153 B
- US 20080038976 A
- US 4118531 A, Hauser
- US 3971373 A, Braun
- US 4100324 A, Anderson
- US 4429001 A, Kolpin
- US 6268495 B
- US 5976208 A
- US 5968635 A
- US 5919847 A
- US 5908598 A, Rousseau
- WO 2009148747 A
- WO 2009148744 A
- US 7390351 B, Leir
- US 5057710 A, Nishiura
- US 4652282 A
- US 4789504 A, Ohmori
- US 6397458 B
- US 6398847 B
- US 6409806 B
- US 6432175 B
- US 6562112 B
- US 6660210 B
- US 6808551 B, Jones/Lyons
- US 7244291 B, Spartz
- US 7244292 B, Kirk
- US 6419871 B
- US 6238466 B
- US 6214094 B
- US 6213122 B
- US 4557945 A
- US 4508781 A
- US 4264750 A
- US 20030134515 A1
- US 20020174869 A1
- WO 0107144 A
- US 30782 A, van Turnhout
- US 31285 A, van Turnhout
- US 32171 A, van Turnhout
- US 4215682 A, Davis
- US 4375718 A, Wadsworth
- US 5401446 A, Wadsworth
- US 4588537 A, Klaase
- US 4592815 A, Nakao
- US 6365088 B, Knight
- US 5496507 A, Angadjivand
- US 6824718 B, Eitzman
- US 6743464 B, Insley
- US 6454986 B, Eitzman
- US 6406657 B, Eitzman
- US 6375886 B, Angadjivand
- US 7765698 B, Sebastian


### Non-patent literature cited in the description


- **VAN A. WENTE.** Superfine Thermoplastic Fibers. *Industrial Engineering Chemistry,* vol. 48, 1342-1346
- Report No. 4364 of the Naval Research Laboratories. **VAN A. WENTE.** Manufacture of Super Fine Organic Fibers. 25 May 1954
- **DAVIES, C. N.** The Separation of Airborne Dust and Particles. Institution of Mechanical Engineers, 1952
- **R.C. BROWN.** Air Filtration. Pergamon Press, 1993
- **A. J. WAKER ; R. C. BROWN.** Application of Cavity Theory to the Discharge of Electrostatic Dust Filters by X-Rays. *Applied Radiation and Isotopes,* 1988, vol. 39 (7), 677-684
- *CHEMICAL ABSTRACTS,* 4980-54-5
- *CHEMICAL ABSTRACTS,* 553-70-8
- *CHEMICAL ABSTRACTS,* 18917-95-8
- Superfine Thermoplastic Fibers. **VAN A. WENTE.** INDUST. ENGN. CHEM. vol. 48, 1342-46
- *Naval Research Laboratory Report,* 15 April 1954, 111437